# EUROPEAN PATENT APPLICATION

(11) **EP 1 710 075 A1**
(43) Date of publication of application: **11.10.2006**
(21) Application number: 05704358.0
(22) Date of filing: 27.01.2005
(51) Int. Cl.: B32B 1/02, B29C 49/22, B32B 27/36, B65D 1/09, B65D 65/40, B29K 67/00, B29L 22/00

(54) **HOLLOW CONTAINER AND PROCESS FOR PRODUCING THE SAME**

(30) Priority: 30.01.2004 JP 2004024258
(71) Applicant: Kureha Corporation, Tokyo 103-8552 (JP)
(72) Inventor: SATO,Takashi c/oPACKAGING MATERIALS RESEARCH LABS., Omita-city, Ibaraki 311-3436 (JP); ITOH, Daisuke c/oPACKAGING MATERIALS RESEARCH LABS, Omitama-City, Ibaraki 311-3436 (JP); TOBITA,Hisanori c/oPACKAGING MATERIALS RESEARCH, Ibaraki 311-3436 (JP); SUZUKI, Satoru c/oPACKAGING MATERIALS RESEARCH LAB, Ibaraki 311-3436 (JP)
(74) Representative: Vermeulen, Martijn
(86) International application number: PCT/JP2005/001537
(87) International publication number: WO 2005/072944

(57) **Abstract**

There is provided a multilayer hollow container having a laminar structure including a PGA resin and a co-laminated resin, such as an aromatic polyester resin, that takes advantage of the gas-barrier property of the PGA resin layer to the utmost and is suitable for bottles of a small volume required to exhibit a higher level of gas-barrier property. The multilayer hollow container has a co-stretched multilayer wall structure including a layer of a polyglycolic acid resin comprising at least 60 wt.% of recurring unit represented by a formula of -(O·CH₂·CO)-···(1), and a layer of co-laminated resin comprising an aromatic polyester resin or an aliphatic polyester resin other than polyglycolic acid resin laminated on at least one surface of the polyglycolic acid resin layer, and satisfying a formula of: T × w/v ≤ 0.8 × 10⁻³···(2), wherein T represents an oxygen gas permeability (ml/container/day/atm), v represents a volume (ml) of the container, and w represents a content (wt.%) of the polyglycolic acid resin with respect to a whole weight of the container.

## Description

### [TECHNICAL FIELD]

The present invention relates to a resin-made hollow container, generally called a plastic bottle, particularly a resin-made hollow container improved in gas-barrier property and a process for production thereof.

### [BACKGROUND ART]

Plastic bottles have been widely used as containers substituting for glass bottles because they are light and have high impact resistance. Among these, so called "PET bottles" comprising polyethylene terephthalate (hereinafter abbreviated as "PET") as a material are widely commercialized as bottles for carbonated beverages, fruit juice-containing beverages, sports drinks, teas and coffee drinks. Bottles of single PET layer are generally used, but because PET has a poor gas-barrier property, multi-layered bottles including a resin layer having a high gas-barrier property for extending preservability period and preventing degradation of the contents have been proposed (JP-A 2001-106219).

Particularly, bottles tend to become smaller in size in recent years to result in a higher percentage of bottle surface area relative to the inner volume, so that a higher gas-barrier property is required of a bottle wall material. As gas-barrier resins, saponified ethylene-vinyl ester copolymer (EVOH) and aromatic polyamide (nylon MXD6) have been known for example, whereas EVOH has a difficulty of lowering in barrier property at a high humidity though it exhibits a high barrier property at a low humidity, and the barrier property of nylon MXD6 is insufficient. As a material expected to replace such materials, polyglycolic acid (PGA) resin as an aliphatic polyester has a gas-barrier property which is at least several times (i.e., at most one of several in terms of oxygen permeability) compared with nylon MXD6 and less liable to cause a lowering in barrier property at a high humidity than EVOH, so that PGA resin is expected as a material substituting for a conventional barrier resin. In an ordinary PET bottle-forming process, a test tube-shaped form called a preform is generally produced by injection molding and the preform is heated and shaped into a bottle by stretching in a longitudinal direction with a rod together with blowing of compressed air thereinto (blow molding), optionally followed by heat setting, whereas a forming process of operating the blow molding in two steps is also known, and it is also known to improve the heat resistance and pressure resistance through optimization of the heat-setting conditions.

However, with respect to PET or polyester resin bottles including a gas-harrier resin layer of PGA resin, almost no trial has been made in order to improve the gas-barrier property by optimizing the lamination structure in connection with the forming condition.

### [DISCLOSURE OF INVENTION]

Accordingly, a principal object of the present invention is to provide a multilayer hollow container including a gas-barrier layer of PGA resin by optimizing the lamination structure in connection with the forming condition.

More specifically, according to the present invention, there is provided a gas-barrier multilayer hollow container having a co-stretched multilayer wall structure including a layer of a polyglycolic acid resin comprising at least 60 wt.% of recurring unit represented by a formula of -(O·CH₂·CO)- ····(1), and a layer of co-laminated resin comprising an aromatic polyester resin or an aliphatic polyester resin other than polyglycolic acid resin laminated on at least one surface of the polyglycolic acid resin layer, and satisfying a formula of:
T × w/v ≤ 0.8 × 10⁻³ ··· (2), wherein T represents an oxygen gas permeability (ml/container/day/atm), v represents a volume (ml) of the container, preferably at most 700 (ml), and w represents a content (wt.%) of the polyglycolic acid resin with respect to a whole weight of the container, preferably 1-10 wt.%.

The left-side term T × w/v in the above formula (2) is an index of gas-barrier property of polyglycolic acid resin barrier resin, which index is required to be larger as the container volume becomes smaller, and a smaller value thereof indicates that the PGA resin is in a state of showing a larger gas-barrier property.

Further, the process for producing a gas-barrier multilayer hollow container according to the present invention comprises the steps of: heat-forming a hollow laminate preform having a layer structure including a layer of a polyglycolic acid resin comprising at least 60 wt.% of recurring unit represented by a formula of -(O·CH₂·CO)- ····(1) and a layer of co-laminated resin comprising an aromatic polyester resin or an aliphatic polyester resin other than polyglycolic acid resin and having a glass-transition point of at least 70 °C laminated on at least one surface of the polyglycolic acid resin layer; cooling the preform; re-heating the preform; and co-stretching the preform.

A history of study with the above-mentioned object through which the present inventors have arrived at the present invention will be briefly mentioned below.

It has been known that a high gas-barrier property of PGA resin is attributable to tight molecular alignment owing to a high density of ca. 1.5 g/cm³. The density of the PGA resin can be increased further by tightening of molecular alignment due to stretching and crystallization which effectively function to increase the gas-barrier property by themeselves. However, if the PGA resin is excessively crystallized in re-heating for stretching of a laminate preform of PGA resin and an aromatic polyester resin, etc., the PGA molecules cannot follow molecular re-alignment during the stretching to cause severance of molecule chains or breakage within the crystal or at the crystalline interfaces to result in microscopic defects (voids), so that the density of the PGA resin layer is rather lowered. Through optimization of the combination of PGA resin and a co-laminated resin of an aromatic polyester resin, etc., and the condition in the re-heating for preventing premature crystallization before the stretching of the laminate preform, however, the present inventors have succeeded in minimization of the left-side term T × w/v in the above formula (2), that is, maximization of the gas-barrier property of the PGA resin layer, thereby arriving at the present invention.

### [BEST MODE FOR PRACTICING THE INVENTION]

Hereinbelow, some preferred embodiments of the present invention will be described in order.

### (polyglycolic acid resin)

A principal component layer of the multilayer hollow container produced according to the present invention comprises a polyglycolic acid resin (hereinafter sometimes referred to as a "PGA resin"). The PGA resin may include a homopolymer or copolymer including a glycolic acid unit represented by a formula of - (O·CH₂·CO)- (1) as a recurring unit in a proportion of at least 60 wt.%. The above recurring unit can also be provided by polycondensation of glycolic acid, a glycolic acid alkyl ester or a glycolic acid salt, but may more preferably be provided by ring-opening polymerization of glycolide (GL) that is a bimolecular cyclic ester of glycolic acid.

The polyglycolic acid resin layer is included as a gas-barrier resin layer in the multilayer hollow container of the present invention . It is particularly preferred that it functions as an effective gas-barrier layer even if it is included as a layer occupying at most 10 wt.% in a resin laminate with an aromatic polyester resin, etc. In order to form such an excellent gas-barrier resin, it is possible to use a copolymer (PGA copolymer) containing at least 80 wt.%, more preferably at least 90 wt.%, most preferably at least 95 wt.%, of polyglycolic acid (PGA) polymerized units, whereas homopolymer (PGA homopolymer) should be selected in order to obtain the highest gas-barrier property.

Examples of the comonomer that is used in a relatively small amount for forming the PGA copolymer together with glycolic acid may include: cyclic monomers, such as ethylene oxalate (i.e., 1,4-dioxane-2,3-dione), lactides, lactones (e.g., β-propiolactone, β-butyrolactone, β-pivalolactone, γ-butyrolactone, δ-valerolactone, β-methyl-δ-valerolactone, and ε-caprolactone), carbonates (e.g., trimethylene carbonate), ethers (e.g., 1,3-dioxane), carbonates (e.g., dioxanone), amides (ε-caprolactam); hydroxycarboxylic acids, such as lactic acid, 3-hydroxypropanoic acid, 3-hydroxybutanoic acid, 4-hydroxybutanoic acid and 6-hydroxycaproic acid, and alkyl esters thereof; substantially equi-molar mixtures of aliphatic diols, such as ethylene glycol and 1,4-butanediol, with aliphatic dicarboxylic acids, such as succinic acid and adipic acid, or alkyl esters thereof; and combinations of two or more species of the above. Among these, it is preferred to use a comonomer selected from the group consisting of lactide (LA, including optional isomers such as L-lactide (LLA), D-lactide (DLA) and DL-lactide (DLLA), trimethylene carbonate (TMC) and caprolactone (CL).

The PGA resin may preferably have a weight-average molecular weight (based on polymethyl methacrylate) in a range of 50,000 - 800,000 according to GPC measurement using hexafluoroisopropanol solvent. If the weight-average molecular weight is too low, the strength is weak, so that it is liable to craze or crack during the stretching, etc. Too high a weight-average molecular weight results in difficulties in multi-layer formation, such as non-uniform resin layer thicknesses leading to a difficulty in obtaining a good stretched product, heat evolution due to shearing force exerted by a screw during the melt processing for processing of the PGA resin into pellets or formation into a shaped product, thus leading to coloring of the resin, and products with poor appearance, such as irregularity (flow mark) due to insufficient melting. The weight-average molecular weight is more preferably on the order of 150,000 - 300,000.

As preferable thermal properties for smooth practice of the stretching, PGA resin may preferably have a Tg (glass transition temperature) of 30 - 55 °C, more preferably 35 - 50 °C; a Tc1 (crystallization temperature on temperature increase) of 60 - 135 °C, more preferably 65 - 120 °C; a Tc2 (crystallization temperature on temperature decrease) of 140 - 200 °C, more preferably 145 - 195 °C; and a Tm (melting point) of 150 - 230 °C, more preferably 180 - 225 °C.

In the PGA resin layer, it is possible to incorporate another thermoplastic resin in addition to the above-mentioned PGA resin, but even in such a case, it is preferred that the polyglycolic acid resin layer is composed of as high a percentage of PGA polymerized units as possible within a range of at least 60 wt.% of the resins constituting the polyglycolic acid resin layer.

To the PGA resin, it is possible to incorporate a thermal stabilizer, according to necessity, in a proportion of 0.003 - 3 wt. parts, preferably 0.005 - 1 wt. part, per 100 wt. parts of the PGA resin.

### (Co-laminated resin)

In the multilayer hollow container of the present invention, a co-laminated resin comprising an aromatic polyester resin or an aliphatic polyester resin other than polyglycolic acid resin is laminated on at least one surface, preferably both surfaces, of the PGA resin layer. The aliphatic polyester resin other than polyglycolic acid resin may comprise a homopolymer or copolymer of the above-mentioned comonomers copolymerizable with glycolic acid, such as polylactic acid. The aromatic polyester resin is a polyester of which at least one, preferably a dicarboxylic acid, of a diol and a dicarboxylic acid providing the polyester is aromatic, and may suitably be a polymer of ethylene terephthalate, which is an ester of ethylene glycol and phthalic acid. A co-laminated resin, such as an aromatic polyester resin, having too high a Tg (glass transition temperature) relative to Tc1 of the PGA resin layer, is not preferred because the crystallization of the PGA resin layer proceeds during the re-heating for stretching. Tg of the co-laminated resin such as an aromatic polyester resin is preferably at most 70 °C, more preferably 50 - 60 °C. It is possible to use homopolymer of ethylene terephthalate (Tg = ca, 75 °C) if a PGA resin having a high Tc1 is used, but it is preferred to use a copolyester obtained by replacing one of ethylene glycol and terephthalic acid with CHDM (cyclohexane dimethanol), dimer acid, etc., and polybutylene terephthalate can also be suitably used. The co-laminated resin, such as an aromatic polyester resin, may preferably have an I.V. (inherent viscosity) value of 0.7 - 0.8 as measured by using a Ubbelohde viscometer.

The co-laminated can also be a form of recycled resin which is obtainable by blending within a virgin resin thereof a pulverized granular resin of the multilayer hollow container or a re-pelletted resin thereof for the purpose of recycling. Further, the granular resin may have been washed with or acid water to remove the polyglycolic acid resin therefrom. It is possible that the co-laminated resin contains the polyglycolic acid resin, but the content thereof should preferably be at most 10 wt.%, further preferably at most 3 wt.%, most preferably at most 1 wt.%.

### (Production process)

For production of the multilayer hollow container of the present invention, it is preferred to use a process of once forming a test tube-form laminate, i.e., a laminate preform or bottomed parison, of the PGA resin and the co-laminated resin such as an aromatic polyester resin through heat-forming, cooling and, after re-heating, forming (blow molding) the preform into a bottle shape by blowing thereinto compressed air, along with longitudinal stretching thereof with a rod, to press it against a blow mold.

### (Laminate preform)

The polyglycolic acid resin layer may preferably occupy 1-10 wt.% of the laminate preform on a weight basis (substantially identical to a thickness basis). In excess of 10 wt.%, the crystallization excessively proceeds at the time of heating the laminate preform for stretching to require a large stress for the stretching and rather result in a lowering of gas-barrier property due to formation of voids. Below 1 wt.%, the resultant multilayer hollow container is caused to have an insufficient gas-barrier property, so that it becomes difficult to accomplish the object of the present invention of obtaining a multilayer hollow container having good gas-barrier property.

Such a preform may be formed by co-injection molding method. The co-injection molding method includes a successive molding method and a simultaneous molding method. Both methods can be used, but the simultaneous molding method may suitably be used in order to form a preform with two resins and three layers. The injection temperature may suitably be 250 - 280 °C. The thus-formed laminate may ordinarily have a thickness of ca. 2 - 10 mm.

### (Heating (re-heating) of the laminate preceding the stretching)

Preceding the stretch-blow molding of the laminate preform, the laminate preform is reheated to a temperature that is not excessively higher than Tc1 of the PGA resin, preferably at most 90 °C, more preferably 50 - 60 °C. It is preferred to adopt a method of re-heating for 30 - 110 sec., preferably 40 - 100 sec., by means of an infrared heater. If the re-heating time is too short, the temperature of the preform is liable to be ununiform to result in a thickness irregularity at the time of the blow molding and also an ununiform molecular orientation. On the other hand, if the re-heating time is too long, the PGA resin is crystallized to impair its stretchability.

### (Stretch blow molding)

The thus-re-heated laminate preform is set in a mold and subjected to blow stretching at ratios of longitudinally 1.5 - 4.0 times and transversely 3.0 - 9.0 times, preferably longitudinally 2.0 - 3.5 times and transversely 3.5 - 5.0 times. If the stretching ratio is too low, the molecular orientation is liable to be insufficient, and if the stretching ratio is too high, the severance of molecular chains is liable to occur. The areal ratio (= longitudinal stretching ratio × transverse stretching ratio) may preferably be 9 - 12.

### (Heat setting)

It is preferred to heat-set a hollow container (bottle) formed in a final step of the stretch blow molding by holding it at a temperature of 70 - 160 °C, preferably 110 - 150 °C, for 1 - 10 sec., preferably 3 - 7 sec., thereby improving the size stability of the thus-formed hollow container. This may preferably be performed by holding the thus-formed hollow container in a mold heated at the above-mentioned temperature. Such a heat-setting operation in a heated mold is not performed in an ordinary stretch-blow molding of a PET bottle but may preferably function in the hollow container of the present invention using a polyester having a relatively low glass transition temperature as a co-stretched resin for maintaining a good size stability in a high-temperature environment of 50 - 60 °C, such as in a heated vending machine. Without heat setting, a shrink deformation is liable to occur around 55 °C, but such a shrink deformation can be suppressed by the heat-setting.

### (Multilayer hollow container)

The multilayer hollow container of the present invention obtained through the above-mentioned steps exhibits an excellent gas-barrier property as represented by a parameter on the left side of the above-mentioned formula (2), i. e., T × w/v of at most 0.8 × 10⁻³, preferably at most 0.5 × 10⁻³, wherein T represents an oxygen gas permeability (ml/container/day/atm), v represents a volume (ml) of the container, and w represents a content (wt.%) of the container, and may be used as a hollow container exhibiting a more excellent gas-barrier property in the use where PET bottles have been conventionally used, such as containers for carbonated beverage, refreshing beverages, edible oil, juice, liquors, and, further, drinking water, detergents and cosmetics.

As the multilayer hollow container of the present invention has a wall structure exhibiting a particularly excellent gas-barrier property, it is particularly suitably be formed as a small-volume bottle with an inner volume of at most 700 ml, particularly 300 - 550 ml, having a large surface area per volume. A multilayer formation of such a small-volume bottle is generally liable to be difficult so that, in order to retain a good formability of the multilayer hollow container of to present invention, it is preferred that the weight content (almost-equal to a thickness proportion) of the polyglycolic acid resin layer in the laminate container is in the range of 1 - 10 wt.%. In the multilayer hollow container of the present invention, a polyglycolic acid resin layer even in such a small content (i.e., in a small thickness) can function as a good gas-barrier layer.

### [Examples]

Hereinbelow, the present invention will be described more specifically based on Examples and Comparative Example. Physical properties, etc., were measured according to the following methods.

### (1) Glass transition temperature (Tg)

A ca. 200 µm-thick sheet was prepared by using a small compression-molding machine at 280 °C, and a sample of ca. 5 mg in weight was cut out from the sheet. The sample was heated at a rate of 20 °C/min. by a differential scanning calorimeter ("DSC-60A", made by K.K. Shimadzu Seisakusho) to measure a glass transition temperature as a middle point determined from an on-set temperature and an end-set temperature.

### (2) Density

PGA was taken out from a core layer of a preform or a bottle to measure a density at 23 °C by the density gradient tube method. To measure a density after re-heating of a preform, the preform immediately after passing through the re-heating zone of a blow molding machine was quenched with liquid nitrogen to obtain a sample.

### (3) Oxygen gas permeability

An oxygen gas permeability meter ("OX-TRAN 22200", made by Modern Control Co.) was used to measure an oxygen gas permeability under the conditions of 23 °C, an internal humidity of 80% RH and an external humidity of 50% RH.

### (4) Re-heating temperature

A temperature of a preform immediately after passing through a re-heating zone of a blow molding machine was measured by an infrared sensor.

### (5) Bottle volume

A formed bottle was filled with water, and a weight of the bottle was measured to determine a volume of the bottle.

### (6) Shrink initiation temperature

A surface layer (outer layer) of a bottle body was cut out in a height direction to provide a sample. The sample was heated at a rate of 20 °C/min. by a thermo-mechanical analyzer ("EXSTER 6000", made by Seiko Instruments K.K.) to measure a shrink initiation temperature (°C) in the course of heating.

### (Example 1)

As polyglycolic acid (PGA), a homopolymer having a melt viscosity of 450 Pa·s as measured at 270 °C and a shear rate of 120 sec⁻¹ was used. To 100 wt. parts of the polyglycolic acid, 0.1 wt. parts of a phosphite anti-oxidant ("PET-8", made by Asahi Denka Kogyo K.K.) was added to form pellets. The polyglycolic acid was used to form a core layer (7 wt.%) and a co-polyester ("WPTS", made by Kanebo Gohsen K.K.) having an I.V. value of 0.74 and a glass transition temperature of 44 °C was used as inner and outer layers to form preforms of 28 g in weight at an injection temperature of 270 °C for the core layer and the inner and outer layers. The preforms were then subjected to blow molding by using a blow molding machine ("SBO-1", made by Sidel Co.) and a bottle mold with a volume of 500 ml heated at 40 °C under the conditions of a molding cycle of 400 BPH (bottles per hour) and a re-heating temperature of 60 °C, followed by heat-setting by 5 sec. of holding.

### (Example 2)

Blow molding was performed by using identical preforms as in Example 1 in the same manner as in Example 1 except for changing the mold temperature to 70 °C.

### (Example 3)

Blow molding was performed by using identical preforms as in Example 1 in the same manner as in Example 1 except for changing the mold temperature to 110 °C

### (Example 4)

Blow molding was performed by using identical preforms as in Example 1 in the same manner as in Example 1 except for changing the mold temperature to 150 °C.

### (Comparative Example 1)

The same PGA containing an anti-oxidant as used in Example 1 was used to form a core layer (8 wt.%) and polyethylene terephthalate having an I.V. value of 0.74 and a glass transition temperature of 74 °C was used as inner and outer layers to form preforms of 28 g in weight at injection temperature of 270 °C for the core layer and 280 °C for the inner and outer layers. The preforms were then subjected to blow molding by using a blow molding machine ("SBO-1", made by Sidel Co.) and bottle mold with a volume of 500 ml heated at 40 °C under the conditions of a molding cycle of 400 BPH and a re-heating temperature of 93 °C, followed by 5 sec. of holding.

### (Comparative Example 2)

Single-layered preforms of 28 g in weight were formed by using a co-polyester having an I.V. value of 0.74 and a glass transition temperature of 44 °C (identical to the one used in Examples 1 - 4) at an injection temperature of 270 °C. Blow-molding was performed in the same manner as in Example 1 except for using the preforms, i. e., by using a blow molding machine ("SBO-1", made by Sidel Co.) and a bottle mold with a volume of 500 ml under the conditions of a molding cycle of 400 BPH and a re-heating temperature of 60 °C.

### (Comparative Example 3)

Single-layered preforms of 28 g in weight were formed by using polyethylene terephthalate having an I.V. value of 0.74 and a glass transition temperature of 74 °C at an injection temperature of 290 °C. Bottles of 500 ml in volume were formed in the same manner as in Example 1 except for using the preforms and changing the re-heating temperature to 93 °C.

The physical properties and PGA gas-barrier performance factors T × w/v, respectively determined for the above-mentioned Examples and Comparative Examples are inclusively shown in the following Table 1.

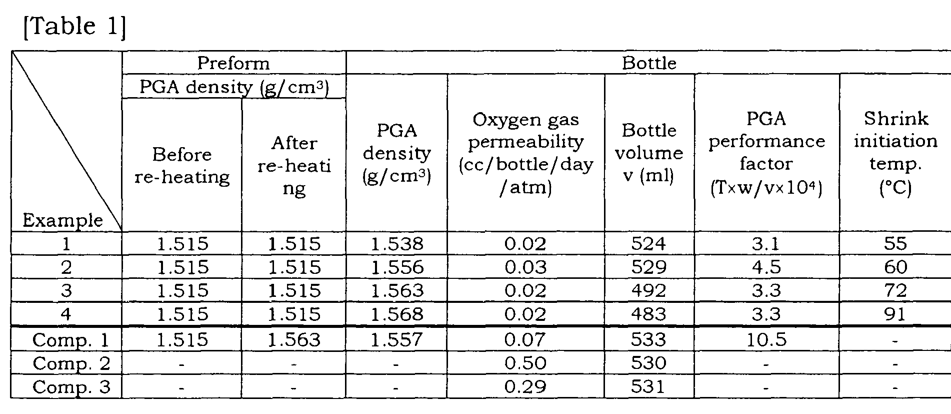

As obviously shown in the above Table 1, the bottles of Examples 1 - 4 of the present invention (PGA content w = 7 wt.%) obtained by optimizing the combination of PGA resin and aromatic polyester resin and the re-heating condition so as to prevent premature crystallization prior to the stretching of laminate preforms exhibited a lower oxygen gas permeability which was 30 - 40 % of that of the bottle of Comparative Example 1 containing a larger proportion of PGA content (w = 8 %) and was much less than the single-layered PET bottles of Comparative Examples 2 and 3 containing no PGA layers. The thus-improved oxygen gas permeability is supported by a remarkably lower PGA gas-barrier factor T × w/v than Comparative Example 1.

### [INDUSTRIAL APPLICABILITY]

As described above, the present invention provides a multilayer hollow container having a laminate structure including a PGA resin and a co-laminated resin such as an aromatic polyester resin, which hollow container takes advantage of the gas-barrier property of the PGA resin layer to the utmost and is suit able for bottles of a smaller volume required to exhibit a higher level of gas-barrier property.

## Claims

1. A gas-barrier multilayer hollow container having a co-stretched multilayer wall structure including a layer of a polyglycolic acid resin comprising at least 60 wt.% of recurring unit represented by a formula of - (O·CH₂·CO)-···(1), and a layer of co-laminated resin comprising an aromatic polyester resin or an aliphatic polyester resin other than polyglycolic acid resin laminated on at least one surface of the polyglycolic acid resin layer, and satisfying a formula of:
T × w/v ≤ 0.8 × 10⁻³···(2), wherein T represents an oxygen gas permeability (ml/container/day/atm), v represents a volume (ml) of the container, and w represents a content (wt.%) of the polyglycolic acid resin with respect to a whole weight of the container.

2. A multilayer hollow container according to Claim 1, wherein the co-laminated resin has a glass transition temperature of at most 70 °C.

3. A gas-barrier multilayer hollow container having a co-stretched multilayer wall structure including a layer of a polyglycolic acid resin comprising at least 60 wt.% of recurring unit represented by a formula of -(O·CH₂·CO)-···(1), and a layer of co-laminated resin comprising an aromatic polyester resin or an aliphatic polyester resin other than polyglycolic acid resin laminated on at least one surface of the polyglycolic acid resin layer, and satisfying a formula of:
T × w/v ≤ 0.8 × 10⁻³···(2), wherein T represents an oxygen gas permeability (ml/container/day/atm), v represents a volume (ml) of the container of at most 700 ml, and w represents a content (wt.%) of the polyglycolic acid resin of 1 - 10 wt.% with respect to a whole weight of the container.

4. A multilayer hollow container according to any of Claims 1-3, comprising a laminate of the polyglycolic acid resin and an aromatic polyester resin.

5. A multilayer hollow container according to any one of Claims 1 - 3, layers of one or both of the aromatic and the aliphatic polyester resin are laminated on both surfaces of and co-stretched with the polyglycolic acid resin layer.

6. A multilayer hollow container according to Claim 5, wherein layers of the aromatic polyester resin are laminated on both surfaces of the polyglycolic acid resin layer.

7. A multilayer hollow container according to any one of Claims 4 - 6, wherein the co-laminated resin comprises a recycled resin.

8. A multilayer hollow container according to Claim 7, wherein the recycled resin contains at most 10 wt.% thereof of the polyglycolic acid resin.

9. A multilayer hollow container according to any one of Claims 1-8, wherein the polyglycolic acid resin has thermal properties including: a Tg (glass transition temperature) of 30 - 55 °C, a Tc1 (crystallization temperature on temperature increase) of 60 - 135 °C, a Tc2 (crystallization temperature on temperature decrease) of 140 - 200 °C, and a Tm (melting point) of 150 - 230 °C.

10. A process for producing a gas-barrier multilayer hollow container, comprising the steps of: heat-forming a hollow laminate reform having a layer structure including a layer of a polyglycolic acid resin comprising at least 60 wt.% of recurring unit represented by a formula of -(O·CH₂·CO)-···(1), and a layer of co-laminated resin comprising an aromatic polyester resin or an aliphatic polyester resin other than polyglycolic acid resin and having a glass-transition point of at least 70 °C laminated on at least one surface of the polyglycolic acid resin layer; cooling the preform; re-heating the preform; and co-stretching the preform.

11. A production process according to Claim 10, wherein the hollow laminate preform is formed by co-injection.

12. A production process according to Claim 10 or 11, wherein the laminate preform after heating is re-heated to a temperature of at most 90 °C by heating it for 30 - 110 sec. by an infrared heater.

13. A production process according to any of Claims 10 - 12, wherein the re-heated laminate preform is set in a mold and subjected to blow co-stretching at ratios of longitudinally 1.5 - 4.0 times and transversely 3.0 - 9.0 times.

14. A production process according to any of Claims 10 - 13, wherein a container after the co-stretching is heat-set by holding it in a heated mold at 70 - 160 °C for 1 - 10 sec.
